# EUROPEAN PATENT APPLICATION

(11) **EP 2 111 045 A1**
(43) Date of publication of application: **21.10.2009**
(21) Application number: 09005312.5
(22) Date of filing: 14.04.2009
(51) Int. Cl.: H04N 7/24

(54) **Method and apparatus for data stream analysis and decoding apparatus**

(30) Priority: 16.04.2008 JP 2008107106
(71) Applicant: NEC Electronics Corporation, Kawasaki, Kanagawa 211-8668 (JP)
(72) Inventor: Ienaga, Masayuki, Kawasaki Kanagawa 211-8668 (JP)
(74) Representative: Glawe, Delfs, Moll

(57) **Abstract**

If a variable length data stream is transmitted, ignoring a data alignment in a client using a network, the present invention provides a mechanism to analyze the data stream and generate a data stream that can be used by an existing AV equipment. A data stream analysis apparatus includes a buffer which receives and holds a part of a variable length data stream as input data, where the variable length data stream has header information and transfer information, a stream information holder which holds stream information regarding the data stream, and a data analyzer which analyzes the stream information and input data newly received, generates new stream information using the input data and the stream information if the header information cannot be obtained, stores the new stream information to the stream information holder, and outputs transfer information included in the input data if the header information is detected.

## Description

### BACKGROUND

### 1. Field of the Invention

The present invention relates to a technique for analyzing variable length stream data, and particularly to a technique for analyzing variable length stream data in which a transfer data unit is not identified as a network client.

### 2. Description of Related Art

Consumer digital AV equipments have been traditionally using broadcast and disk media. For example, as for MPEG (Moving Picture Experts Group) data, a data processing section mounted to an AV equipment has commonly been streams having fixed packet length and aligned by each packet. As the packet length is fixed, AV equipments can easily find the position of a packet.

On the other hand, there was no agreement for a transmission of a stream with fixed packet length and also aligned by packet between a server and a client using a network (for example, the Internet). Therefore, a client is to receive a stream with variable packet length and not aligned by packets.

In recent years, consumer digital AV equipments are becoming to be connected to a network. Data processed by such applications comes to include streams with variable length packets, which are generated by personal computers and digital cameras.

Further, a transfer server has been generally transferring certain amount of data size such as a predetermined data length (for example 512KB) without analyzing the data irrespective of the content of data, in order to reduce the throughput.

Japanese Unexamined Patent Application Publication No. 2004-343473 discloses a variable length code decoding apparatus which aims to achieve a high speed decoding process. In this variable length code decoding apparatus, a variable length code is converted to a fixed length code before being accumulated in a stream buffer, the converted fixed length code is accumulated in the stream buffer, and the accumulated fixed length code is decoded by a decoder.

The technique disclosed by Japanese Unexamined Patent Application Publication No. 2004-343473 is intended for complete variable length streams. That is, the technique does not support an incomplete data stream such as an adverse condition of data transfer and data streams which ignore packet alignment. Moreover, the Japanese Unexamined Patent Application Publication No. 2004-343473 supports only video codes, and is not applicable to information transfer in a system layer of MPEG1 and MPEG2-PS.

Recently, clients using a network increase their chances to receive variable length data streams such as videos from severs. Such circumstances require a decoding apparatus to be a client to interpret the transferred variable length data streams. For example, the client needs to process variable length packets MPEG1 and MPEG2 program streams which are transferred by a server, ignoring a packet alignment.

Further, a client is desired to convert the interpreted data stream so that it can be used by an existing digital AV equipment. It is especially desired to provide fixed length packets which can be used without changing the functions mounted to a digital AV equipment when a variable length data stream is transferred while ignoring the packet alignment.

### SUMMARY

As described so far, in a client using a network, if a variable length data stream is transmitted, ignoring a data alignment, it has been desired to provide a mechanism to analyze the data stream and generate a data stream that can be used by an existing AV equipment.

An exemplary aspect of an embodiment of the present invention is a data stream analysis apparatus that includes a buffer which receives and holds a part of a variable length data stream as input data, where the variable length data stream has header information and transfer information, a stream information holder which holds stream information regarding the data stream, and a data analyzer which analyzes the stream information and input data, which is newly received, generates new stream information using the input data and the stream information if the header information cannot be obtained, stores the new stream information to the stream information holder, and outputs transfer information included in the input data if the header information is detected. The data stream analysis apparatus detects the header information included in the variable length data stream using the input data, which is received this time, and input data, which is already received. The data stream analysis apparatus uses the detected header information to output the transfer information. The information to output is used by a destination device. In this way, the data stream analysis apparatus enables to output information that can be used by a destination device even if a variable length data stream is divided into several sections to be transmitted.

Another exemplary aspect of an embodiment of the present invention is a decoding apparatus that includes the data stream analysis apparatus mentioned above, a data converter which converts the transfer information into a fixed length stream, where the transfer information is output from the data stream analysis apparatus, a converted data buffer which stores the fixed length stream, and a decoder which decodes the fixed length stream. The data stream analysis apparatus outputs necessary information to the decoder and the data converter converts the information into a data arrangement, which can be used by the decoder. In this way, the decoder is able to decode a variable length data stream without missing data even if a variable length data stream is divided into several sections to be transmitted.

Another exemplary aspect of an embodiment of the present invention is a method for data stream analysis that includes inputting and holding a part of a variable length data stream in a buffer as input data, where the variable length data stream has header information and transfer information, holding stream information regarding the data stream which is extracted from input data in the past to a stream information holder, analyzing the stream information and input data, which is newly input, generating stream information using the input data and the stream information if the header information cannot be detected to store the stream information in the stream information holder, and outputting the transfer information included in the input data if the header information is detected.

If a variable length data stream is transmitted, ignoring a data alignment in a client using a network, the present invention provides a mechanism to analyze the data stream and generate a data stream that can be used by an existing AV equipment.

### BRIEF DESCRIPTION OF THE DRAWINGS

The above and other exemplary aspects, advantages and features will be more apparent from the following description of certain exemplary embodiments taken in conjunction with the accompanying drawings, in which:
Fig. 1 is a block diagram illustrating an example of the configuration of an analysis apparatus according to exemplary embodiments of the present invention;
Fig. 2 is a block diagram illustrating a decoding apparatus having the analysis apparatus of Fig. 1;
Fig. 3 illustrates an example of the structure of a variable length data stream;
Fig. 4 is a flowchart illustrating an example of an operation of the analysis apparatus according to a first exemplary embodiment of the present invention;
Fig. 5 is a flowchart illustrating an example of an operation of a header detection process according to a first exemplary embodiment of the present invention;
Fig. 6 is a flowchart illustrating an example of an operation of a header identifier search process according to the first exemplary embodiment of the present invention;
Fig. 7 illustrates an example of a data arrangement of a pack and a conversion into a TS packet (when there is one packet);
Fig. 8 illustrates an example of a data arrangement of a pack and a conversion into a TS packet (when there are several packets);
Fig. 9 explains an interruption of a data stream;
Fig. 10 is a flowchart illustrating an example of an operation of a header identifier search process according to a second exemplary embodiment of the present invention;
Fig. 11 is a flowchart illustrating an example of an operation of a header identifier search process 1 according to the second exemplary embodiment of the present invention;
Fig. 12 is a flowchart illustrating an example of an operation of a header identifier search process 2 according to the second exemplary embodiment of the present invention;
Fig. 13 is a flowchart illustrating an example of an operation of a header identifier search process 3 according to the second exemplary embodiment of the present invention; and
Fig. 14 is a flowchart illustrating an example of an operation of a header identifier search process 4 according to the second exemplary embodiment of the present invention.

### DETAILED DESCRIPTION OF THE EXEMPLARY EMBODIMENTS

Hereafter, exemplary embodiments of the present invention are described with reference to the drawings. For simplicity, the description and the drawings below are omitted and simplified as appropriate. In the drawings, components and corresponding sections having the same configurations and functionalities are marked with the same reference numerals. The explanation will not be repeated.

### First exemplary embodiment

A first exemplary embodiment of the present invention explains an analysis apparatus, an analysis method and a decoding apparatus using the analysis apparatus. The analysis apparatus provides a mechanism to search for header information, detect the header information and then output transfer information, when a variable data stream is transmitted while ignoring data alignment. This mechanism assumes that in AV equipments, some or all header and transfer information is required among header information and transfer information which is included in a variable length data stream being transferred.

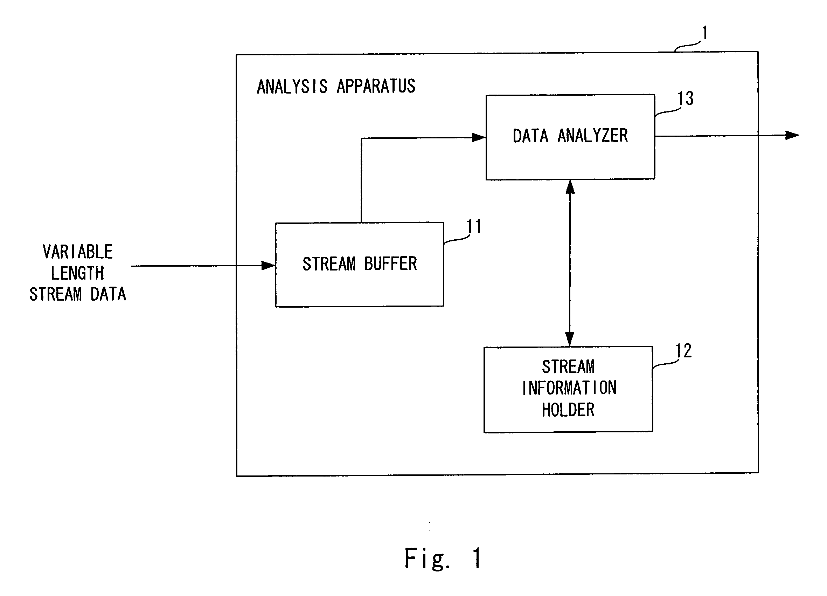

Fig. 1 is a block diagram illustrating an example of the configuration of the analysis apparatus according to the first exemplary embodiment of the present invention. The analysis apparatus (data stream analysis apparatus) 1 includes a stream buffer 11, a stream information holder 12 and a data analyzer 13.

The stream buffer 11 holds externally input variable length data streams. The variable data stream includes header information and transfer information (payload and content). The variable data is transferred from a server via a network, for example. The stream buffer 11 may either hold an entire variable length data stream or part of a variable data stream. In the following explanation, part or all of a variable length data stream held by the stream buffer 11 for one input is referred to as "input data".

In this specification, data arrangement indicates the arrangement structure of header and transfer information, which is for example a packet alignment that determines an alignment of a packet. The data arrangement is determined by the type of data to process. The data arrangement is previously agreed by a server and a client, or a sender and a receiver. Data is processed in the devices according to this agreement. For example, the data arrangement includes the one defined for MPEG.

The stream information holder 12 holds stream information regarding a variable length data stream. The stream information is a result of an analysis on a variable data stream performed by the data analyzer 13 using input data received in the past. The stream information is the information detected by the data analyzer 13 regarding a variable data stream (complete variable length data stream) using one or more input data which is already held by the stream buffer 11. The stream information includes at least one of part of header information (hereinafter referred to "fragment data") and an amount of remaining information. The stream information may include information concerning other variable length data streams.

Fragment data is a part of a variable length data stream. Fragment data may be a data stream included in one time of input data, or the fragment data may be of combined data streams which are included in input data of several times. Fragment data includes a part of a variable length data stream which is input data and cannot be distinguished whether it is header information. Further, fragment data may include data which is formed by extracting a part of header information from one or more input data.

The amount of remaining information is the amount of information which is not output by the data analyzer 13 among whole amount of the transfer information. In other words, the amount of remaining information is the amount of information which is not yet held by the stream buffer 11 as input data. The amount of remaining information is represented by a numerical value calculated by subtracting the amount of transfer information, which is already output from the data analyzer 13, from the total amount of transfer information which is included in a complete variable length data stream.

The data analyzer 13 analyzes the input data held in the stream buffer 11 and the stream information held in the stream information holder 12, and attempts to detect the header information. If the data analyzer 13 cannot detect the header information, the data analyzer 13 generates (updates) stream information based on the input data and the stream information held by the stream information holder 12, and stores the generated stream information in the stream information holder 12. Further, if the data analyzer 13 detects the header information, the data analyzer outputs the transfer information included in the input data. Furthermore, the data analyzer 13 holds a read pointer. The read pointer is an address (point) over the stream buffer 11 to start reading out the input data held in the stream buffer 11. The read pointer is used also as a point to start outputting data. The data analyzer 13 is notified with a start address where the variable length data stream is stored and the data size when the variable data stream is input to the stream buffer 11. The data analyzer 13 holds either the address notified at this time or an address specified during the process (specifically, the start address of the header information) as a read pointer.

For example, the data analyzer 13 obtains the header information and outputs the transfer information as described below. If the amount of remaining information included in stream information is zero and the data analyzer 13 does not hold part of the header information, the data analyzer 13 searches for the header information from the input data, and stores part of the detected header information in the stream information holder 12 as the stream information until the header information can be obtained. After obtaining the header information, the data analyzer 13 outputs the transfer information and specifies the amount of remaining information. Further, if the stream information holder 12 holds the amount of remaining information, the data analyzer 13 updates the amount of remaining information while outputting the input data. If the amount of remaining information is larger than zero, it can be determined that the header information is already detected. Therefore, this embodiment explains an aspect in which the amount of remaining information is used as an information source to determine if the header information is detected or not. It is noted that a flag may be used instead of the amount of remaining information, which indicates whether the header information is detected or not. Alternatively, detection state information indicating detection state may be used.

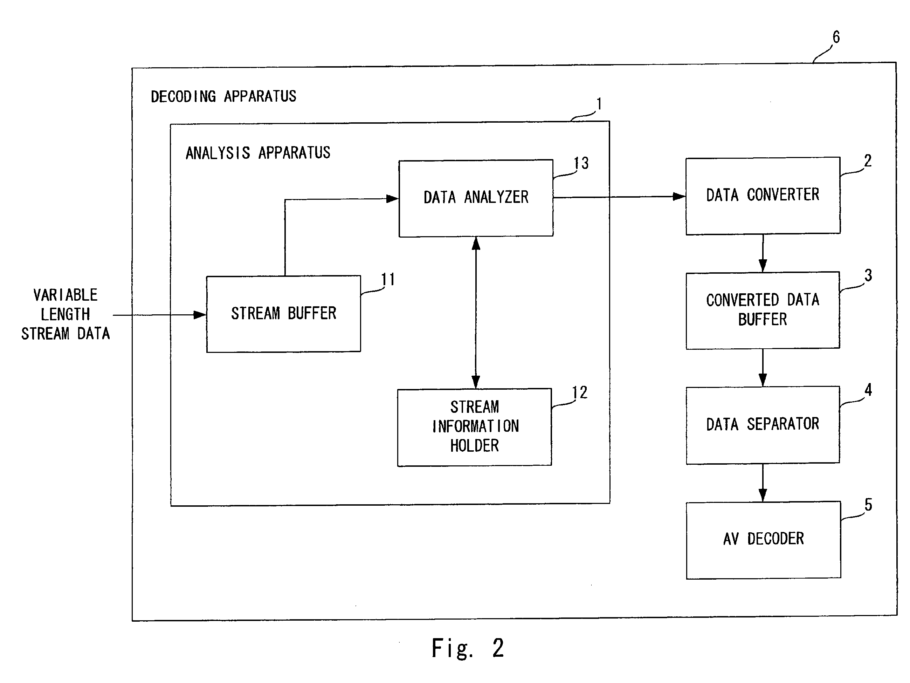

Next, an example of an apparatus using the analysis apparatus 1 of Fig. 1 is explained. Fig. 2 is a block diagram illustrating an example of the configuration of a decoding apparatus 6 mounted with the analysis apparatus 1. The decoding apparatus 6 includes the analysis apparatus 1, a data converter 2, a converted data buffer 3, a data separator 4 and an AV (Audio and Visual) decoder 5.

The data converter 2 converts the information output from the analysis apparatus 1 (specifically, header and transfer information) into a predetermined format. The data analyzer 2 here is explained with a case of converting the information into fixed length data, more specifically a case of converting into a TS (Transport) packets. It is noted that the information output from the analysis apparatus 1 is not limited to the header and transfer information as long as the information is based on a variable length data stream. Further, the analysis apparatus 1 and the data converter 2 process the information that can be used by the AV decoder 5. The data converter 2 should eventually convert into data of a format which can be used by the AV decoder.

The converted data buffer 3 holds the data converted by the data converter 2. The data separator 4 extracts data to be output to the AV decoder 5 from the data held by the converted data buffer 3, and outputs the extracted data to the AV decoder 5. The AV decoder 5 inputs the coded data and decodes it into sound or video. An existing AV equipment can be used for the AV decoder 5.

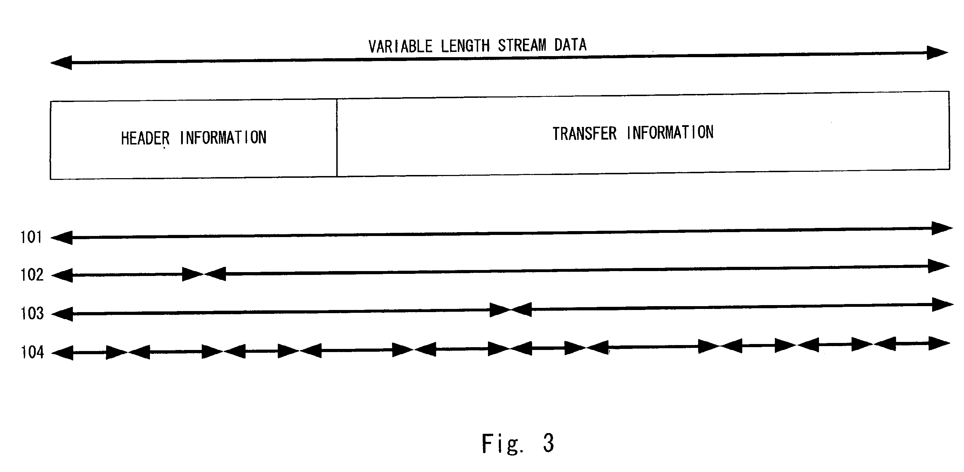

Fig. 3 illustrates an example of the structure of a variable length data stream. The variable length data stream according to the exemplary embodiments of the present invention is composed of two section, which are header information and transfer information. The header information includes information regarding the subsequent transfer information, for example total amount of transfer information (total amount of information) and data arrangement. The transfer information is information to be transferred and includes sound and video information. A header identifier indicating the start of header information is pre-pended to the head of the header information. The header identifier is also referred to as a header code. The header information includes the header identifier and other information, such as the overall size of a header and related information if several kinds of headers are included in the header information.

The bottom row of Fig. 3 illustrates an example of a situation in which a variable length data stream is transmitted from a server. A variable data stream is transmitted from a server to a client. However the entire variable length data stream is not necessarily transmitted at a time depending on a network environment and server processes. A case in which the entire variable length data stream is transmitted at a time (code 101) is to be a case in which a complete variable length data stream is transmitted. If a variable length data stream is transmitted in several times, there are following cases; a case in which the data stream is divided during the header information (code 102), a case in which the data stream is divided during the transfer information (code 103), and a case in which the data stream is divided during the header and transfer information (code 104). The division status indicated by the codes 101 to 104 are merely examples. The point into which a variable length data stream is divided is not related with the data arrangement, however is determined by a server and communication status.

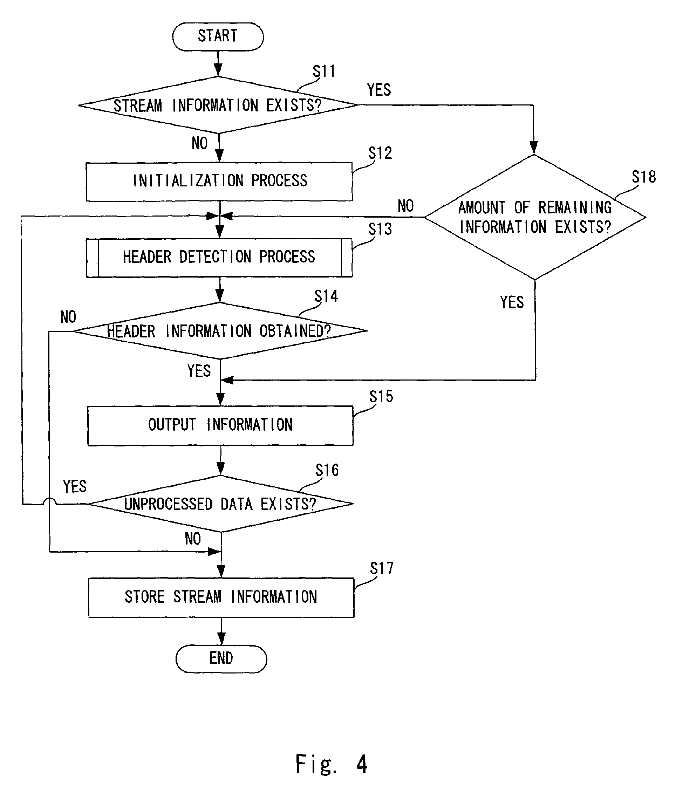

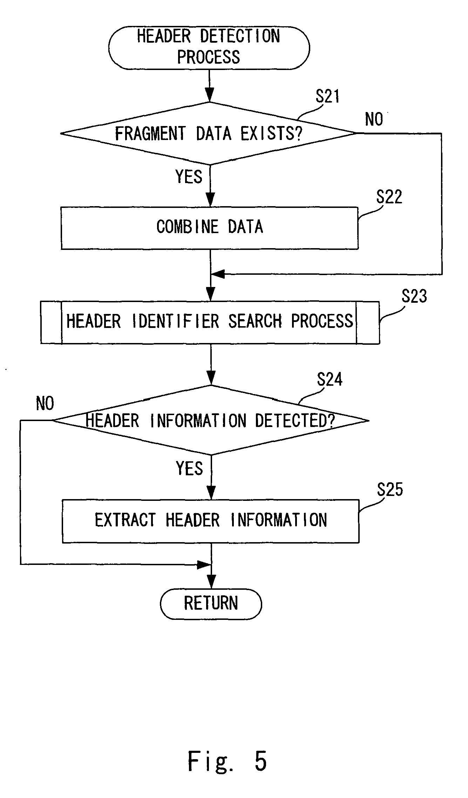

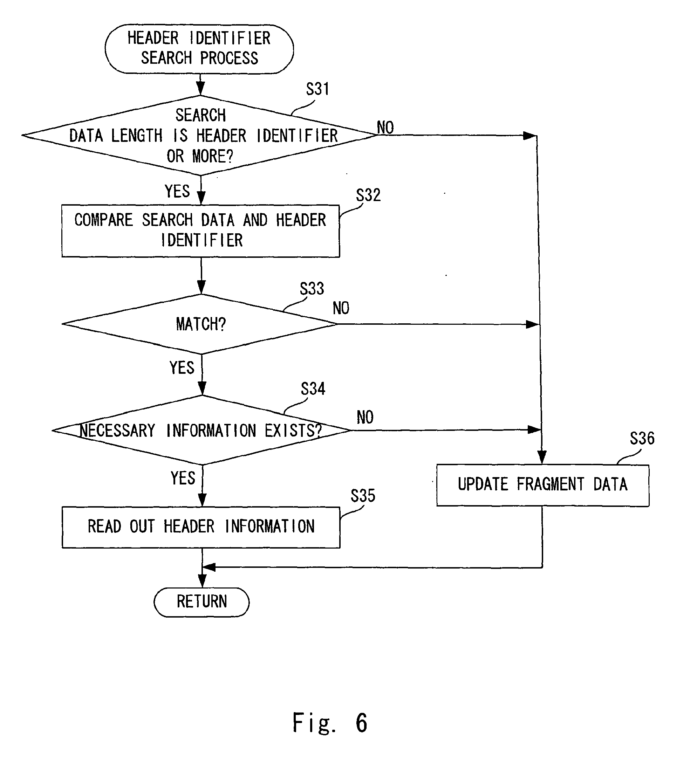

An operation of the analysis apparatus 1 is explained hereinafter. Figs. 4 to 6 are flowcharts illustrating operation examples of the analysis apparatus of this embodiment. Fig. 4 illustrates the entire operation, Fig. 5 illustrates an operation of a header detection process, and Fig. 6 illustrates an operation of a header identifier search process.

When the stream buffer 11 receives and holds input data, the data analyzer 13 checks if fragment data or the amount of remaining information is held as stream information of the stream information holder 12. That is, the data analyzer 13 checks if there is stream information or not (S11). If the fragment data or the amount of remaining information is not held (NO in S11), the data analyzer 13 performs an initializing process to a variable or the like to be used in an analysis process. For example, an internal buffer is initialized, which temporarily holds information such as total amount of transfer information and a read pointer. If there is the stream information (YES in S11), the data analyzer 13 determines if there is the amount of remaining information in the stream information (S18). If the amount of remaining information is zero (NO in S18), the data analyzer 13 moves to the process of step S13. If the amount of remaining information is larger than zero (YES in S18), the data analyzer 13 sets a read pointer to the start of the input data of this time and moves to the process of step S15.

In step S13, the data analyzer 13 performs the header detection process (S13). The header detection process is described later with reference to Fig. 5. If the data analyzer 13 obtains the header information (YES in S14), the data analyzer 13 outputs the obtained header and transfer information (S15). When obtaining the header information, the data analyzer 13 sets the read pointer to the start of the header information and specifies the total amount of the transfer information of the internal buffer. Further, after obtaining the header information (YES in S18), the data analyzer 13 specifies the read pointer to the start of the input data. The data analyzer 13 reads out the input data held in the stream butter 11 and outputs the input data.

At this time, the data analyzer 13 subtracts the amount of information to be output from the total amount of information and holds the amount of information not yet output as the amount of remaining information. The data analyzer 13 reads out the data held in the stream buffer 11 until the amount of remaining information of the transfer data becomes zero, or until the data analyzer 13 reads out all the input data and then outputs the data. If the amount of remaining information is zero and also there still is remaining unprocessed data (YES in S16), the data analyzer 13 determines that it is a new variable data stream and moves to the header detection process (S13). At this time, the data analyzer 13 moves the read pointer to the start address of the unprocessed data and leaves the amount of remaining information to zero.

If there is no unprocessed data (NO in S16) and if the header information cannot be obtained (NO in S14), the data analyzer 13 generates new stream information and writes it to the stream information holder 12. At this time, the data analyzer 13 updates the fragment data as the stream information if the header information cannot be obtained, updates the amount of remaining information if the data analyzer 13 is in process of transferring the transfer information, and sets the fragment data and the amount of remaining information to an initial value (clears the value) if the transfer is ended.

Next, the header detection process is described hereinafter in detail with reference to Figs. 5 and 6. If there is the fragment data as the stream information (S21), the data analyzer 13 combines the input data held in the stream buffer 11 with the fragment data (S22). The combined data or the input data input to the stream buffer 11 this time is hereinafter referred to as search data. The data analyzer 13 searches for a header identifier using the search data (S23).

The detailed operation to search for the header identifier is illustrated in Fig. 6. If the search data length is more than or equal to the length of the header identifier (YES in S31), the data analyzer 13 compares the search data and the header identifier (S32). If the search data length is less than the length of the header identifier (NO in S31), the data analyzer 13 cannot search for the header identifier. Thus the data analyzer 13 writes the search data to the fragment data (S36) and terminates the header identifier search process, concluding that the header information cannot be detected.

For example, the data analyzer 13 searches for the header identifier by shifting one by one in order from the start of the search data and comparing whether the header identifier exists or not. The data analyzer 13 starts searching using part of the start of the header identifier. When there is a match, information of the header identifier may be further added to search. This method is effective if the header information has several headers and part of the start of the header identifier is common to the headers. Details of the comparison method are not described here.

If the search data and the header identifier match (YES in S33), the data analyzer 13 checks if necessary information following the header identifier is included in the input data (S34). If the necessary data is included (YES in S34), the data analyzer 13 reads out the header information from the input data (S35). The necessary information includes the size of the header information and the total amount of the transfer information or the like.

If the search data and the header identifier do not match (NO in S33) or if the necessary information following the header identifier is not included in the input data (NO in S34), the data analyzer 13 writes the search data to the fragment data and terminates the header identifier search process, concluding that the header information is not detected. It is noted that the data analyzer 13 may extract the necessary information for the next header identifier search process among the search data and holds the information as fragment data. For example, if the data analyzer 13 detects part from the start of the header identifier, the data analyzer 13 may hold the part as the fragment data.

Next, if the data analyzer 13 detected the header information (YES in S24), the data analyzer 13 extracts the necessary information from the readout header information (S25). To be specific, the data analyzer 13 extracts the total amount of the transfer information, the read pointer and the like from the header information, sets them to the internal buffer, initializes the fragment data, and then terminates the header information detection process. If the header information cannot be detected (NO in S24), the data analyzer 13 terminates the header information detection process.

The operation explained with reference to Figs. 4 to 6 enables the analysis apparatus 1 to sequentially output variable length data streams which are input externally. Specifically, the analysis apparatus 1 obtains the header information, and then outputs the transfer information. Further, even when the transfer information is divided into several times to be input, the analysis apparatus 1 is able to sequentially output the transfer information included in the input data. That is, the data analyzer 13 is able to output the transfer information in order of input as input data. At this time, the analysis apparatus 1 does not need to wait until the entire transfer information or the entire header and transfer information is input.

With such analysis apparatus 1, in the decoding apparatus 6 depicted in Fig. 2, the header and the transfer information output from the analysis apparatus 1 is sequentially input to the data converter 2. The data converter 2 sequentially converts the data input from the analysis apparatus 1 into a fixed length TS packet and stores it to the converted data buffer 3. At this time, the data converter 2 can generate the input transfer information sequentially as fixed length packets. For example, even if the input header information or transfer data is less than fixed-length size, the data converter 2 can generate fixed length data by inserting stuffing data.

As described so far, fixed length data can be sequentially stored to the converted data buffer 3 without waiting for a complete variable length data stream is input as variable length data. This enables the data separator 4 and the AV decoder 5 to sequentially use the TS packets stored to the converted data buffer 3. The AV decoder 5 can proceed to process without waiting for a complete variable length data stream to be stored, thereby improving the efficiency of the entire decoding process.

As described above, the analysis apparatus of this embodiment is able to convert a data stream, which ignores the data arrangement such as packet alignment and is transferred, into information according to the data arrangement. It is noted that the analysis apparatus of this embodiment may be incorporated when a data stream is transferred intermittently. This enables to use an apparatus using the data stream of this data arrangement, for example the AV decoder, without changing the apparatus even in the environment in which the existing data arrangement is ignored to be transferred. Therefore, even in a case in which a data stream generated according to the data arrangement by a server or a sender is intermittently transferred, a client or a receiver can use the data stream. Thus, a defect of the data stream generated in a data transfer can be resolved.

### Second exemplary embodiment

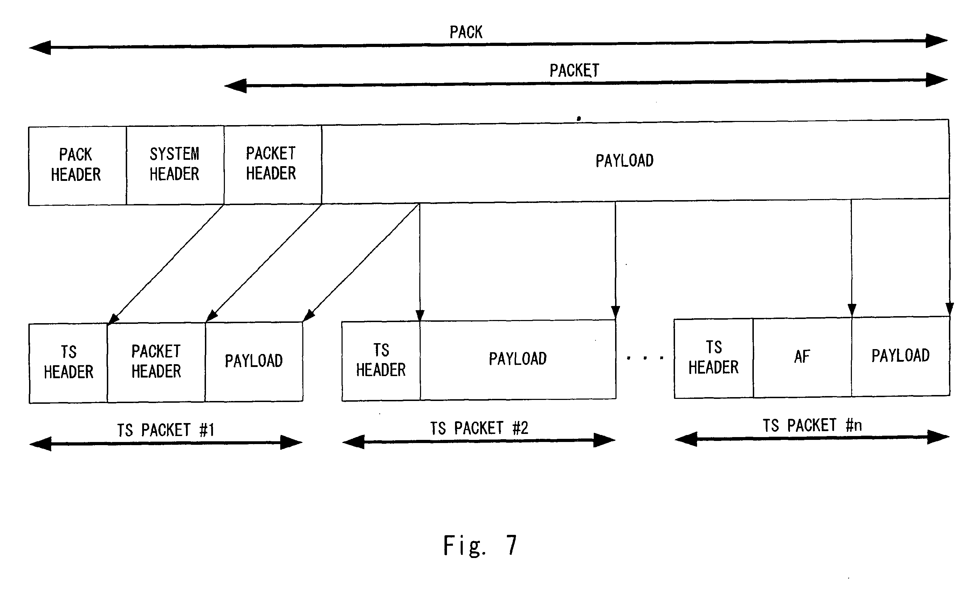

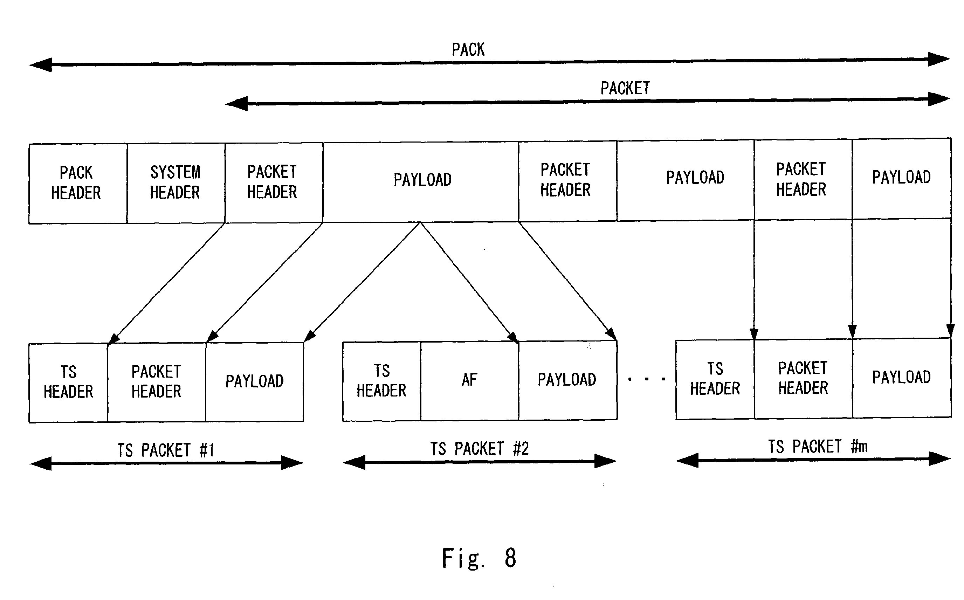

A second exemplary embodiment explains an operation example of the analysis apparatus 1 with an example of a pack used in MPEG1 and MPEG2-PS as a data stream. The following case is described as an example hereinafter. In the decoding apparatus 6, the analysis apparatus 1 receives a pack from a server, converts the received pack into TS packets, and transfers the TS packet to the AV decoder 5. A pack is a data arrangement used in MPEG1 and MPEG 2-PS, and is an example of the variable length data stream illustrated in Fig. 3. Figs. 7 and 8 illustrate a data arrangement example of a pack and a TS packetization.

In a pack, the header information includes a pack header, a system header and a packet header. A system header may not be included depending on the pack. The transfer information is represented as a payload in Figs. 7 and 8. The packet header and the payload are referred to as a packet. The size of the payload is included in the packet header in the pack. Therefore, the analysis apparatus 1 needs to obtain a packet header as the header information. When the analysis apparatus 1 detects the pack header, the position of the packet header can be obtained. First, the analysis apparatus 1 detects the start of the pack to detect and obtain the pack header, and then detects and obtains the packet header. Alternatively, the analysis apparatus 1 needs to directly detect and obtain the packet header. The system header can be ignored as it is not necessary for decoding the payload.

A packet may be included in one pack as illustrated in Fig. 7 or several packets may be included in one pack as illustrated in Fig.8. The lower part of Figs. 7 and 8 represent the structure examples of a TS packet (n and m are integers indicating the number of TS packets). The analysis apparatus 1 extracts the packet and outputs it to the data converter 2. The data converter 2 converts the packet into TS packets, and stores them to the converted data buffer 3. A TS packet is fixed length data.

Generally, generation of a TS packet (TS packetization of a pack) is performed as described below. The pack header and the system header are removed from the pack, and the packet is divided by a fixed length of TS. As for the remaining data at the end, an adaptation field (AF) of the TS packet is extended to insert a stuffing, data is placed thereafter to form a TS packet. A pack is converted to TS by a unit of packet. Thus if there are several packets in a pack, more than one packet is not converted into one TS packet. For example, as illustrated in TS packet #2 of Fig. 8, a pack is converted to a TS by each packet. A packet header and a payload are included in the first TS packet (for example, TS packet #1 in Fig. 7 and TS packets #1 and #m of Fig. 8). If the end of a packet is smaller than the size of a TS packet, a TS packet including a stuffing is generated (for example, TS packet #n of Fig. 7).

The operation outline of converting a pack into a TS packet in this embodiment is stated below. The analysis apparatus 1 is realized as an apparatus to perform a stream generation process for one data transfer from a server or a sender. The stream generation process indicates an operation to output input data (at least part of a variable length data stream), which is input by the analysis apparatus 1 in one transfer. The process performed by the analysis apparatus 1 in response to one data transfer is hereinafter referred to as a stream generation process. A first stream generation for one complete variable length data stream is referred to as a first time. The analysis apparatus 1 terminates the stream generation process regardless of the position of the data end without waiting to receive a following input data. Therefore, the stream generation process is terminated in limited time.

In the first time stream generation process, the analysis apparatus 1 firstly searches for a pack header, detects a packet according to the grammar of a pack, and then outputs the packet. When the packet is output, the data converter 2 converts a packet into TS. The first time here is when the analysis apparatus 1 performs a first stream process. If it is not the first time, the data head is fragmented packets. Therefore, the data converter 2 takes over the information from the last time and outputs it. Then the data converter 2 moves to the next packet. Subsequently, the analysis apparatus 1 outputs a detected packet every time a packet appears. The data converter 2 converts a packet into TS.

If a packet is divided at the end of input data, the data converter 2 holds the status of the process at that time and necessary data as the stream information, and terminates the TS conversion process. The content of the information held concerning the data end and a next time complementary process differ depending on the position of the interruption in the data end in terms of MPEG grammar.

In a network application, a server may transfer a stream to a client by an arbitrary size from an arbitrary position of the stream. Therefore, the detection process of a pack or a packet and TS conversion process may be interrupted at the data end. Thus the analysis apparatus 1 needs to takes over the information of the processing process and start the next stream generation process. In this embodiment, the analysis apparatus 1 holds the information of the processing process in the stream information holder 12 as the stream information so as to perform the next stream generation process.

As for the first time, the analysis apparatus 1 starts processing from the point where a pack header (0x000001BA) is searched for and detected. Other than the first time, the analysis apparatus 1 holds the information of where the data ends in the previous stream generation process in the stream information. The analysis apparatus 1 complements according to the stream information. The complementary method differs depending on where the data stream is divided in terms of the MPEG grammar. The details are described below.

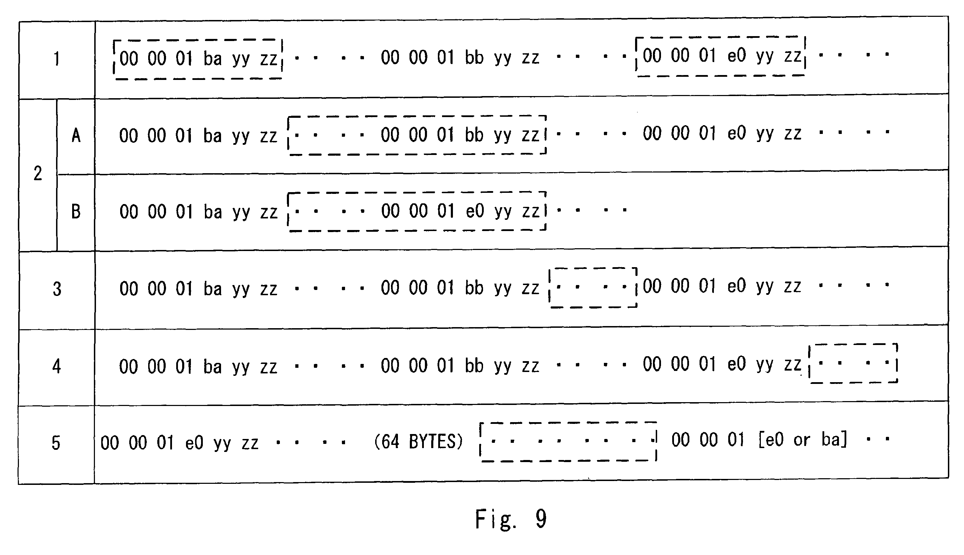

In this embodiment, the division of the data stream is categorized as follows. (1) The case in which a data stream is divided during a header (type of the header unknown). (2) The case in which a data stream is divided during a pack header. (3) The case in which a data stream is divided during a system header. (4) The case in which a data stream is divided during a packet header. (5) The case in which a data stream is divided during a payload. The interruption of a data stream is explained with reference to Fig. 9. Fig. 9 illustrates specific examples for the cases (1) to (5). The pack header, the system header or the packet header is to start with the header identifier of "00 01 00 XX YY ZZ." The header identifier "00 00 01" is common to all the headers and "XX YY ZZ" differs depending on the type of the header. The header identifier "XX" represents the type of the header. The explanation follows for each case.
(1) The case in which a data stream is divided during a header (type of the header unknown).
   The case explained here is the case of a division during "00 00 01 XX YY ZZ" (a pack header or a packet header). If the data stream cannot be obtained to "00 00 01 XX", the analysis apparatus 1 cannot determine whether it is a pack header or a packet header. Further, if the data stream cannot be obtained to "YY ZZ", the following data length cannot be identified. Therefore, the analysis apparatus 1 obtains these six bytes first and then proceeds the process later on. In the column of (1) of Fig. 9, the data stream is divided in any position in the two sections surrounded by the dotted lines. Thus all the sections surrounded by the dotted lines are detected before moving to the process of the next stage. It is noted that this case includes the case in which a header cannot be detected and the case not applicable to any of the cases (2) to (5).
(2) The case in which the data stream is divided during a pack header.
   It is the case in which the data stream is divided during after six bytes of the pack header to the first six bytes of the next header. In Fig. 9, A of (2) is the case in which there is a system header and B is the case in which there is no system header. For A and B, the data stream is divided in any position of the sections surrounded by the dotted lines. The pack header indicates the section from "00 00 01 ba" to the next system header or before the packet header in terms of the standard. This is because that if this section cannot be obtained, it is not possible to determine whether the following data is a system header or a packet header until the following header code is obtained. If the data stream is divided during the first of the pack header "00 00 01 ba yy zz", it is categorized to the case (1).
(3) The case in which the data stream is divided during a system header.
   It is a case in which the data stream is interrupted in a area excluding the first six bytes. It means that the interruption occurred in any position of the area surrounded by the dotted line. A packet header always follows a system header, if the data stream is interrupted in the header part, it is categorized to the case (4).
(4) The case in which the data stream is divided during a packet header.
   It is a case in which the data stream is divided in a section excluding the first six bytes among the packet header. It means that the data stream is divided in any position surrounded by the dotted line of (4) in Fig. 9. If the data stream is divided in the first six bytes, it is categorized to the case (1).
(5) The case in which the data stream is divided during a payload.
   It is a case in which the data stream is divided in the payload section of the packet. It means that the data stream is divided in any position of the section surrounded by the dotted line of (3) in Fig. 9. If the data stream is divided in the section 64 bytes from the first packet, it is categorized to the case (4). In this case, the amount of remaining information included in the stream information is specified.

Each case of a division of a data stream is described above. In this embodiment, the data analyzer 13 determines which category a data stream division is categorized among the cases (1) to (5) and includes the evaluation result as division information. The analysis apparatus 1 specifies the case (1) as an initial value of the division information. The data analyzer 13 of the analysis apparatus 1 writes the stream information including the division information to the stream information holder 12. Therefore, in this embodiment, the stream information at least includes fragment data, the amount of remaining information and division information.

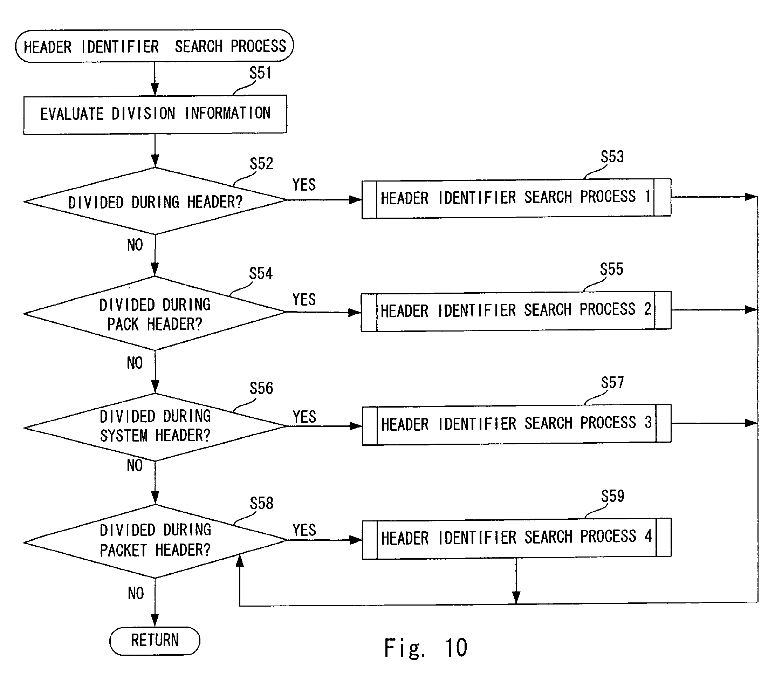

Next, the operation of this embodiment is explained in detail. The whole operation of the analysis apparatus 1 is the same as the operation of Figs. 4 and 5. However, the process to specify the initial value of the division information is added in step S12 of Fig. 4. In this embodiment, the operation of the header identifier search process depicted in Fig. 6 is different. Fig. 10 is a flowchart illustrating the details of the header identifier search process according to the second exemplary embodiment of the present invention. The data analyzer 13 reads out the division information from the stream information and determines which cases (1) to (4) the division information is applied thereto (S51). If the division information is the case (5) in which a data stream is divided during a payload, the amount of remaining information is larger than zero in step S18 of Fig. 4. Thus the header detection process (S13) is not performed and the information output process of step S15 is performed. Therefore, it is not included in the process of Fig. 10.

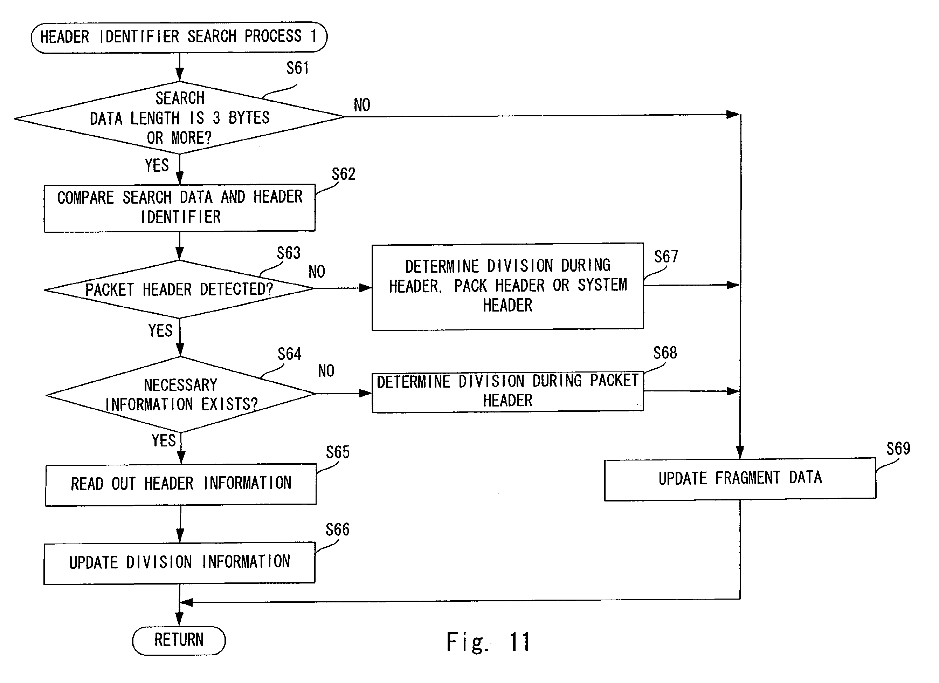

If the division information indicates that the data stream is divided during a header (YES in S52), the data analyzer 13 performs a header identifier search process 1 of Fig. 11 (S53). Specifically, if the search data length is more than or equal to three bytes (YES in S61), the data analyzer 13 compares the search data and the header identifier (S62). The first three bytes of the pack header and the packet header are header codes and are common. By detecting three bytes of this header code, the first addresses of the pack header and the packet header can be detected. Therefore, a search is started if the search data is three bytes or more.

The data analyzer 13 compares the three bytes common header code or the first four bytes of the pack header and the first four bytes of the packet header as a header identifier with the search data. An example of the comparison procedure of the search data and the header identifier is described below, however it is not limited to this procedure but a packet header may be detected by other procedure. For example, the data analyzer 13 uses the three bytes header code which is common to header to compare with the search data. When the header code matches with the search data, the data analyzer 13 uses the next two bytes to compare with the search data to determine whether it is a pack header or a packet header. If it is determined to be a pack header, the data analyzer 13 firstly obtains the first six bytes of the pack header, then the following information, and lastly the information of the start position of the next header code. The data analyzer 13 starts the procedure to detect a packet header from the input data based on the information of the start position of the next header code. Next, if the detected header code is a system header, the data analyzer 13 can obtain the first position of the packet header by obtaining the first position of the next header code.

After that, if the packet header is detected (YES in S63), the data analyzer 13 checks if 64 bytes from the start of the packet header, which is necessary information, is included in the input data (S64). If the necessary data is included (YES in S64), the data analyzer 13 reads out the header information from the input data (S65). The necessary information includes the size of a payload, which follows the packet header. The data analyzer 13 specifies the information of the division during the payload at this time (S66), and terminates the header identifier search process 1, concluding that the header information is detected.

If the packet header cannot be detected (NO in S63), the data analyzer 13 determines the position of the division from one of during a header, a pack header and a system header according to the comparison result of the search data and the header identifier, and then writes the evaluation result to the division information (S67). The data analyzer 13 evaluates the point of the division in the input data according to the categories described in Fig. 9.

If the necessary information of the packet header is not included in the input data (NO in S64), the data analyzer 13 determines that the division occurred during the packet header, and then writes the evaluation result to the division information (S68).

Next, the data analyzer 13 writes the search data to the fragment data (S69) and terminates the header identifier search process 1, concluding that the header information is not detected. If the data analyzer 13 detects that the data stream is divided during a pack header, a system header or a packet header, data, which is not needed to compare with the header identifier among the data held in the search data, is separated to be written to the fragment data. This enables to reduce the load of the next header identifier search process.

If the search data length is less than three bytes (NO in S61), the data analyzer 13 cannot search for the header identifier. Thus the data analyzer 13 writes the search data to the fragment data (S69) and terminates the header identifier search process 1, concluding that the header information is not detected. As there is no change in the division status, the data analyzer 13 does not need to update the interrupted information.

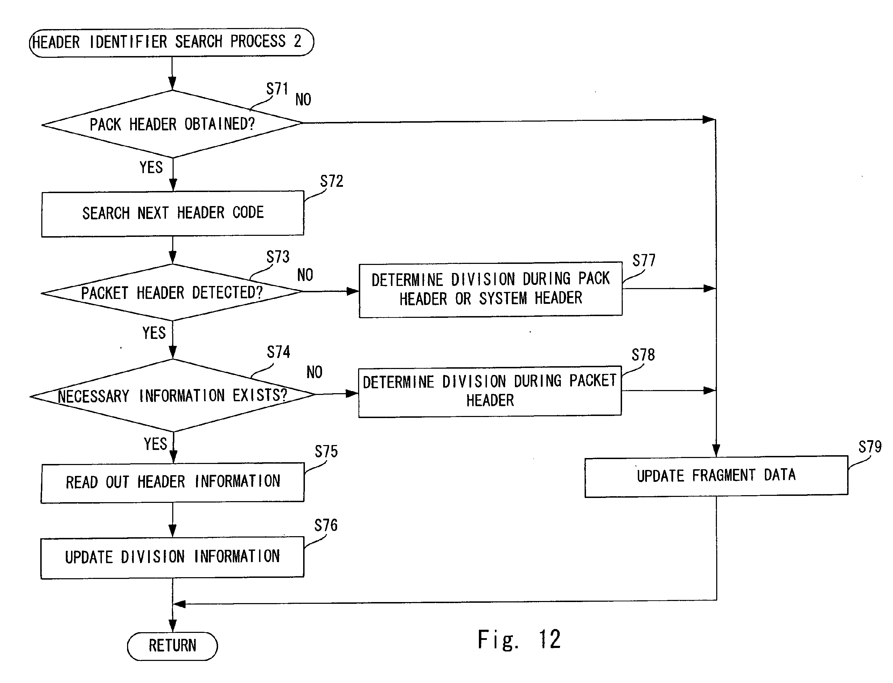

Next, if the interrupted information indicates that the data stream is divided during a pack header (YES in S54), the data analyzer 13 performs the header identifier search process 2 of Fig. 12 (S55). Specifically, if the data analyzer 13 obtains the system header from the search data to the end (YES in S71), the data analyzer 13 stores six bytes from the start of the detected pack header to then internal buffer, and then searches the next code (S72). Although the pack includes or does not include a system header, if there is a system header, the data analyzer 13 detects the system header and then searches for a packet header.

If the packet header is detected (YES in S73), the data analyzer 13 checks if 64 bytes of necessary information from the start of the packet header is included in input data (S74). If the necessary data is included (YES in S74), the data analyzer 13 reads out the header information from the input data (S75). The necessary information includes the size of a payload that follows the packet header. The data analyzer 13 specifies the information of the division during the payload at this time (S76), and then terminates the header identifier search process 2, concluding that the header information is detected.

If the packet header cannot be detected (NO in S73), the data analyzer 13 evaluates the position of the division from one of during a header, a pack header and a system header according to the comparison result of the search data and the header identifier, and then writes the evaluation result to the division information (S77). The data analyzer 13 evaluates the point of the division in the input data according to the categories described in Fig. 9.
If the necessary information of the packet header is not included in the input data (NO in S74), the data analyzer 13 determines that the division occurred during the packet header, and then writes the evaluation result to the division information (S78).

Next, the data analyzer 13 writes the search data to the fragment data (S79) and terminates the header identifier search process 2, concluding that the header information is not detected. If the data analyzer 13 detects that the data stream is divided during a pack header, a system header or a packet header, data, which is not needed to compare with the header identifier among the data held in the search data, is separated to be written to the fragment data. This enables to reduce the load of the next header identifier search process.

If the pack header cannot be detected from the search data length (NO in S71), the data analyzer 13 writes the search data to the fragment data (S77) and terminates the header identifier process 2, concluding that the header information is not detected. As there is no change in the division status, the data analyzer 13 does not need to update the division information.

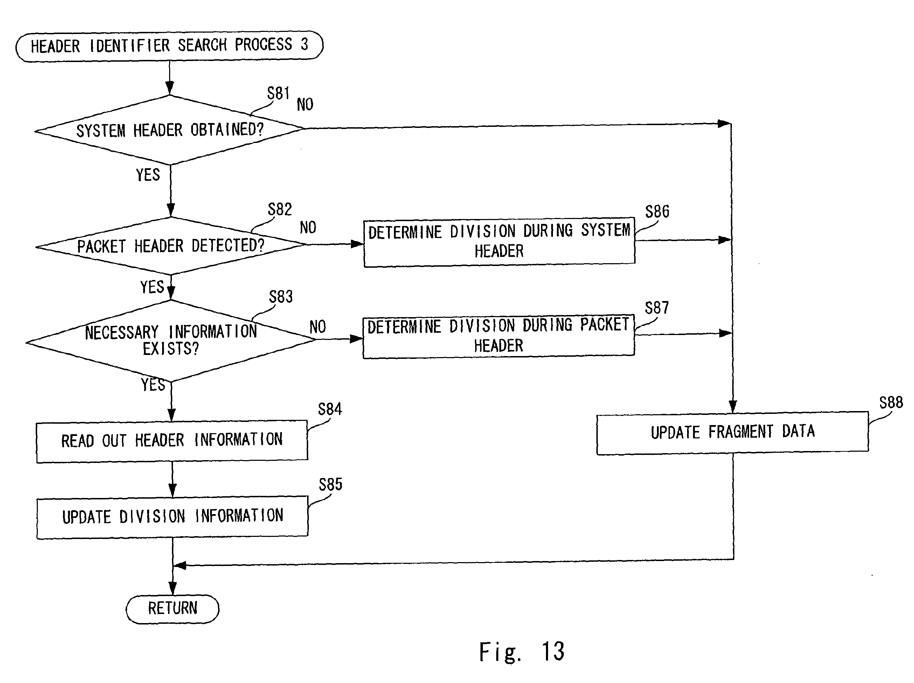

Next, if the division information indicates that the data stream is divided during the system header (YES in S56), the data analyzer 13 performs the header identifier search process 3 illustrated in Fig. 13 (S57). Specifically, if the packet header is obtained from the search data to the end (YES in S81), the data analyzer 13 searches for a packet header that follows the system header. If the packet header is detected (YES in S82), the data analyzer 13 checks whether 64 bytes of necessary information from the head of the packet header is included in the input data (S83). If the necessary data is included (YES in S83), the data analyzer 13 reads out the header information from the input data (S84). The necessary information includes the size of a payload that follows the packet header. The data analyzer 13 specifies the information of the division during the payload at this time (S85), and then terminates the header identifier search process 2, concluding that the header information is detected.

If the packet header cannot be detected (NO in S82), the data analyzer 13 evaluates the position of the interruption from one of during a header, a pack header or a system header according to the comparison result of the search data and the header identifier and writes the evaluation result to the fragment information (S77).
If the necessary information of the packet header is not included in the input data (NO in S83), the data analyzer 13 determines that the division occurred during the packet header and writes the evaluation result to the division information.

Next, the data analyzer 13 writes the search data to the fragment data (S88) and terminates the header identifier process 3, concluding that the header information is not detected. If the data analyzer 13 detects that the data stream is divided during a pack header, a system header or a packet header, data, which is not needed to compare with the header identifier among the data held in the search data, is separated to be written to the fragment data. This enables to reduce the load of the next header identifier search process.

If the system header cannot be obtained from the search data length (NO in S81), the data analyzer 13 writes the search data to the fragment data (S88) and terminates the header identifier search process 3, concluding that the header information is not detected. As there is no change in the division status, the data analyzer 13 does not need to update the division information.

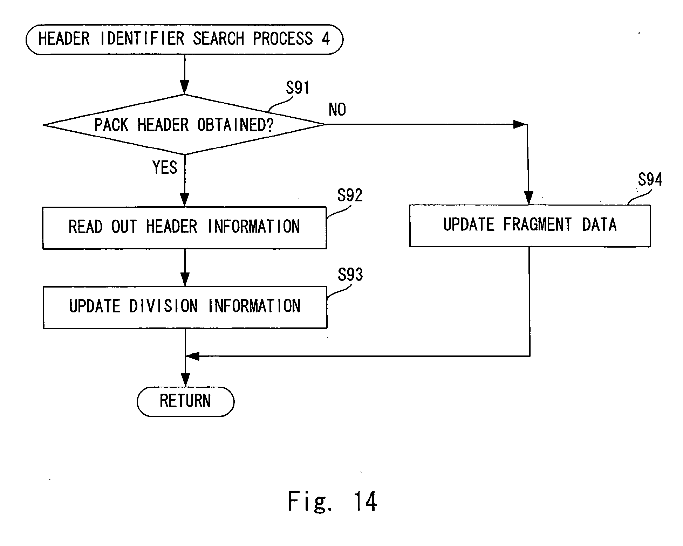

If the division information indicates that the division occurred during the packet header (YES in S58), the data analyzer 13 performs a header identifier search process 4 illustrated in Fig. 14 (S59). Specifically, if the packet header is obtained from the start for 64 bytes from the search data (YES in S91), the data analyzer 13 reads out 64 bytes necessary information (header information) from the first of the packet header from the input data (S92). The necessary information includes the size of a payload that follows the packet header. The data analyzer 13 specifies the information of the division during the payload at this time (S93), and then terminates a header identifier search process 4, concluding that the header information is detected.

If the packet header cannot be obtained (NO in S91), the data analyzer 13 writes the search data to the fragment data (S94) and terminates the header identifier search process 4, concluding that the header information is not detected. As there is no change in the division status, the data analyzer 13 does not need to update the division information.

The operation of the analysis apparatus 1 of this embodiment is described above. The data converter 2 converts the data output from the analysis apparatus 1 into TS packets sequentially. The packs are converted into TS packets in this way.

The TS conversion of the packs reduces the output data to about 120% of the input data. This rate is not constant as it depends on the input data format. Therefore, the amount of data that can be generated may exceeds an output buffer size. The output buffer size is notified to the analysis apparatus 1 and the data converter 2 in advance. In such case, the analysis apparatus 1 outputs data according to the output buffer size.
When the buffer becomes full, the analysis apparatus 1 stops outputting. Alternatively, the data converter 2 outputs data by a unit of TS packet according to the output buffer size and stops outputting when the buffer becomes full. At this time, the analysis apparatus 1 sets the value held in the read pointer to an unprocessed address. The analysis apparatus 1 can avoid missing data by shifting only the amount of processed data and starting the next stream generation process.

Thus, it is possible to organize the data as a complete variable data stream even if a server divides a variable data stream to transmit. For example, it enables a server to reproduce MPEG1 of packet variable length which disregards and transfers a packet aryne, and an MPEG 2 program stream using the existing MPEG data processing circuit simple substance.

This embodiment enables to convert into a transport stream without losing data irrespective of where the data stream is interrupted in terms of the program stream grammar or what size the data stream is received (it may be a unit of byte in the worst case). Further, if the header information includes several types of header information as a pack, the data analyzer 13 can extract the information (header information of a required type) required for the AV decoder 5 (or the data separator) to output the information. Accordingly, a fixed length stream can be generated, which can be used by the AV decoder 5.

It is noted that in the second exemplary embodiment explained a case in which TS packets are generated from a packet variable length MPEG1 and MPEG2 program stream. However the present invention can be applied when other program stream is the input data to generate other fixed length packets.

### Other exemplary embodiments

The data analyzer 13 may edit the information required for the AV decoder 5 among the header information to a necessary data format to output the information. In this case, the data analyzer 13 extracts the necessary information from the header information. In this way, the data analyzer 13 may be provided with the function to edit data that can be processed by the AV decoder 5, in addition to the function to analyze an input variable length data stream. More specifically, if the content or the arrangement of the data of the header information is different, the AV decoder 5 edits the data according to the content or the arrangement of the data that can be used by the AV decoder 5. This enables to respond to the case when the data format of a variable length data stream which is transferred from a server is different from the data format that can be used by the AV decoder 5. Further, the data converter 2 may perform the conversion of the data format.

As described so far, the present invention provides a mechanism to analyze a data stream if a client using a network ignores a data alignment to transmit data and generate a data stream which can be used by an existing AV equipment, in order to analyze the transmitted data stream and restore a data stream which can be used by the existing AV equipment.

The above exemplary embodiments can be combined as desirable by one of ordinary skill in the art.

While the invention has been described in terms of several exemplary embodiments, those skilled in the art will recognize that the invention can be practiced with various modifications within the spirit and scope of the appended claims and the invention is not limited to the examples described above.

Further, the scope of the claims is not limited by the exemplary embodiments described above.

Furthermore, it is noted that, Applicant's intent is to encompass equivalents of all claim elements, even if amended later during prosecution.

## Claims

1. A data stream analysis apparatus comprising:
a buffer that receives and holds a part of a variable length data stream as input data, the variable length data stream having header information and transfer information;
a stream information holder that holds stream information regarding the data stream; and
a data analyzer that analyzes the stream information and input data newly received, generates new stream information using the input data and the stream information if the header information cannot be obtained, stores the new stream information to the stream information holder, and outputs transfer information included in the input data if the header information is detected.

2. The data stream analysis apparatus according to claim 1, wherein the stream information holder holds at least one of fragment data which is at least a part of the input data and an amount of remaining information as the stream information, the amount of remaining information being obtained by subtracting an amount of information already output from the data analyzer from a total amount of information of the transfer information.

3. The data stream analysis apparatus according to claim 2,
wherein the data analyzer searches for the header information from the input data if the amount of remaining information is zero and the data analyzer does not hold the fragment data, stores a part of the detected header information to the stream information holder as the stream information until the header information is obtained, and starts outputting the transfer information by obtaining a start position of the transfer information and the total amount of information from the header information after obtaining the header information, and
if the stream information holder holds the amount of remaining information, the data analyzer outputs the input data while updating the amount of remaining information.

4. The data stream analysis apparatus according to claim 2 or 3,
wherein the data analyzer sequentially outputs input data, which received by the buffer, until the amount of remaining information becomes zero, and
if the amount of remaining information is not zero and unprocessed input data does not exist, the data analyzer repeats a process of outputting remaining transfer information in response to an input of the input data until the amount of remaining information becomes zero.

5. The data stream analysis apparatus according to any one of claims 2 to 4, wherein the data analyzer searches for the header information again if the amount of remaining information becomes zero and the buffer holds unprocessed input data.

6. The data stream analysis apparatus according to any one of claims 1 to 5, wherein the data analyzer selects information required for a data receiving device if the header information is detected, and outputs the information.

7. A decoding apparatus comprising:
the data stream analysis apparatus according to any one of claims 1 to 6;
a data converter that converts the transfer information into a fixed length stream, the transfer information being output from the data stream analysis apparatus;
a converted data buffer that stores the fixed length stream; and
a decoder that decodes the fixed length stream.

8. The decoding apparatus according to claim 7, wherein the data analyzer outputs the detected header information and the transfer information, and
the data converter selects a format which can be processed by the decoder as the fixed length stream and converts the header information and the transfer information into a fixed length stream.

9. The decoding apparatus according to claim 7 or 8, wherein the data stream analysis apparatus receives a data stream of MPEG (Moving Picture Experts Group) 1 format or MPEG2-PS format, and
the data converter converts data output from the data stream analysis apparatus into a TS packet and stores the TS packet to the converted data buffer.

10. A method for data stream analysis comprising:
inputting and holding a part of a variable length data stream in a buffer as input data, the variable length data stream having header information and transfer information;
holding stream information regarding the data stream which is extracted from input data in the past to a stream information holder;
analyzing the stream information and input data newly input,
generating stream information using the input data and the stream information if the header information cannot be detected to store the stream information in the stream information holder; and
outputting the transfer information included in the input data if the header information is detected.
